# DEMANDE DE BREVET EUROPEEN

(11) **EP 0 656 292 A1**
(43) Date de publication de la demande: **07.06.1995**
(21) Numéro de dépôt: 94402587.3
(22) Date de dépôt: 16.11.1994
(51) Int. Cl.: B61C 15/10, G01F 23/16

(54) **Sableur comportant un récipient contenant un matériau granuleux, notamment du sable, associé à une roue de motrice**

(30) Priorité: 01.12.1993 FR 9314374
(71) Demandeur: FORGES DE BELLES-ONDES, F-75009 Paris (FR)
(72) Inventeur: Marcillaud, Roger, F-93390 Clichy sous Bois (FR); Chevrier, Pascal, F-77330 Ozoir-la-Ferriere (FR)
(74) Mandataire: Peuscet, Jacques

(57) **Abrégé**

L'invention concerne un sableur comportant un récipient contenant un matériau granuleux, le récipient étant adapté en partie basse à coopérer avec un orifice à ouverture commandée pour permettre, lorsqu'on le souhaite, l'écoulement du matériau granuleux, caractérisé par le fait que le sableur (2) comprend un socle (30) portant l'orifice (5) à ouverture commandée et supportant d'un côté, le côté inférieur, un corps (10) portant une tubulure (6) de distribution du matériau granuleux (1), pour le distribuer en un endroit désiré, et de l'autre côté les moyens de commande en ouverture de l'orifice (5) qui sont en outre contenus dans le récipient (R), le corps (10) étant fixé au socle (30) de manière démontable.

## Description

L'invention est relative à un sableur comportant un récipient contenant un matériau granuleux, notamment du sable, le récipient étant adapté en partie basse à coopérer avec un orifice à ouverture commandée pour permettre, lorsqu'on le souhaite, l'écoulement du matériau granuleux.

L'invention concerne plus particulièrement, parce que c'est dans ce cas que son application semble devoir présenter le plus d'intérêt, mais non exclusivement, un tel sableur associé à une roue de motrice.

Comme on le sait, un sableur est destiné, lors d'un freinage d'urgence ou normal pour éviter le patinage, à répandre du sable sur le rail de chemin de fer, au-dessous de la roue freinée, pour accroître l'efficacité du freinage et réduire la distance d'arrêt. Le sableur est aussi utilisé lors du démarrage pour améliorer l'adhérence. Le récipient du sableur contient généralement une quantité de sable suffisante pour se déverser pendant toute la durée d'un freinage conduisant à un arrêt complet du train, à partir de sa vitesse maximale possible sur le trajet considéré, ou d'un démarrage.

La présente invention a pour objet un sableur de faible encombrement qui soit d'une maintenance aisée ne nécessitant pas un démontage de l'ensemble pour accéder aux parties essentielles fonctionnelles, tout en permettant d'effectuer l'opération de sablage de manière optimum, et d'empêcher toute vidange intempestive du sable ; un tel sableur peut en outre être agencé en sorte qu'il permette un brassage et un séchage du sable, et qu'il puisse recevoir, sans modification, un détecteur de niveau de sable.

Selon l'invention, un sableur comportant un récipient contenant un matériau granuleux, le récipient étant adapté en partie basse à coopérer avec un orifice à ouverture commandée pour permettre, lorsqu'on le souhaite, l'écoulement du matériau granuleux, est caractérisé par le fait que le sableur comprend un socle portant l'orifice à ouverture commandée et supportant d'un côté, le côté inférieur, un corps portant une tubulure de distribution du matériau granuleux, pour le distribuer en un endroit désiré, et de l'autre côté les moyens de commande en ouverture de l'orifice qui sont en outre contenus dans le récipient, le corps étant fixé au socle de manière démontable.

Avantageusement, les moyens de commande en ouverture de l'orifice sont mis en oeuvre au moyen d'un fluide sous pression hydraulique ou pneumatique, et sont constitués d'un bloc-cylindre à axe vertical recevant à coulissement étanche un piston du type différentiel ayant deux sections correspondant respectivement l'une à celle d'une queue de piston, l'autre à celle d'une tête de piston, la queue ayant une section plus grande que celle de la tête et étant disposée à la partie supérieure du bloc-cylindre.

De préférence, l'orifice est porté par un siège de débit annulaire placé dans l'axe d'une portée de siège de forme conique dont la concavité est tournée vers le réservoir et avec laquelle coopère un clapet circulaire ménagé à l'extrémité de la tête du piston ; la portée de siège est ménagée à la périphérie d'un siège de fermeture qui supporte le siège de débit, le siège de débit étant accessible de l'extérieur lorsque le corps est déposé du socle.

Le corps présente un passage débouchant à sa partie supérieure au droit de l'orifice et relié à sa partie inférieure à un passage, incliné par rapport audit passage et connecté à la tubulure de distribution.

Avantageusement, le bloc-cylindre est alimenté en fluide sous pression par un conduit dont la majeure partie est constituée par l'intérieur d'un tube encastré, à étanchéité, à chacune de ses extrémités, dans le bloc-cylindre, d'une part, et dans le socle, d'autre part; le socle est percé d'un conduit relié, d'un côté, à une source de fluide sous pression et, de l'autre côté, au conduit d'alimentation du bloc-cylindre par l'intermédiaire d'un canal et de passages ménagés dans le corps.

De préférence, le corps porte un ajutage destiné à recevoir du fluide sous pression et à diriger un jet de ce fluide vers la tubulure de distribution; en variante, ou en combinaison, le piston est muni d'un passage axial comportant un passage calibré dans l'axe de l'orifice, le passage calibré étant destiné à recevoir du fluide sous pression et à diriger un jet de ce fluide vers la tubulure de distribution.

Avantageusement, le socle est percé d'un conduit qui débouche intérieurement à l'intérieur du récipient, de l'air soufflé dans ledit conduit permettant le détassage et le séchage du sable contenu dans le récipient.

D'une manière préférée, le sableur est équipé d'un détecteur du niveau du matériau granuleux contenu dans le récipient.

L'invention a également pour objet un détecteur de niveau à l'intérieur d'un récipient contenant un matériau granuleux, notamment du sable, le récipient comportant en partie basse un orifice à ouverture commandée pour permettre, lorsqu'on le souhaite, l'écoulement du matériau granuleux.

L'invention concerne plus particulièrement, parce que c'est dans ce cas que son application semble devoir présenter le plus d'intérêt, mais non exclusivement, un tel détecteur de niveau pour un sableur associé à une roue de motrice.

Un problème que l'invention vise à résoudre est celui de fournir, d'une manière simple, une indication fiable sur le niveau d'un matériau granuleux à l'intérieur d'un récipient.

Ce problème est particulièrement aigu dans le cas d'un sableur associé à une roue de motrice car il s'agit alors d'un dispositif de sécurité. On sait en effet que le sableur est destiné, lors d'un freinage d'urgence, à répandre du sable sur le rail de chemin de fer, au-dessous de la roue freinée, pour accroître l'efficacité du freinage et réduire la distance d'arrêt. Le sableur est aussi utilisé lors du démarrage pour améliorer l'adhérence. Le seuil de sécurité, à l'intérieur du sableur, correspond à une quantité de sable suffisante pour se déverser pendant toute la durée d'un freinage conduisant à un arrêt complet du train, à partir de sa vitesse maximale possible sur le trajet considéré, ou d'un démarrage.

Selon l'invention, un détecteur de niveau d'un matériau granuleux, notamment de sable, à l'intérieur d'un récipient, en particulier à l'intérieur d'un sableur associé à une roue de train, comprend :
- un palpeur disposé à l'intérieur du récipient et monté mobile, l'ensemble étant tel que, lorsque le niveau du matériau est supérieur ou égal à une limite de sécurité, le palpeur au repos se trouve au voisinage du matériau granuleux ou dans ce matériau ;
- des moyens pour exercer une force sur le palpeur, de sorte que, lorsque le niveau du matériau granuleux est inférieur à la limite de sécurité, un déplacement du palpeur soit assuré sous l'action de cette force ;
- et des moyens avertisseurs commandés par le déplacement du palpeur propres à indiquer à un opérateur que le niveau du matériau granuleux est inférieur à la limite de sécurité,
   le palpeur étant monté mobile suivant une direction, et les susdits moyens étant propres à exercer une force sur le palpeur selon ladite direction ; cette direction commune peut être horizontale, ou verticale.

Avantageusement, ces moyens pour exercer une force sur le palpeur sont des moyens pneumatiques. Un bouton-poussoir, destiné à être actionné manuellement, est prévu pour la commande de ces moyens pneumatiques, ou électro-pneumatiques.

Lesdits moyens pneumatiques peuvent comprendre un piston lié au palpeur, le fluide sous pression étant admis du côté du piston à l'opposé du palpeur de sorte que, lorsque ce fluide sous pression est envoyé sur le piston, le piston est sollicité vers le matériau granuleux.

Le palpeur est avantageusement associé à un distributeur propre à commander les moyens avertisseurs par envoi d'un fluide sous pression sur ces moyens avertisseurs lorsque le déplacement du palpeur et du distributeur lié à ce palpeur est suffisant ; le piston associé au palpeur est agencé en sorte qu'il joue le rôle dudit distributeur.

Les moyens avertisseurs peuvent comprendre un indicateur visuel propre à faire saillie sous l'action d'un fluide sous pression lorsque l'opérateur appuie sur le bouton-poussoir et que le palpeur se déplace suffisamment, en raison d'un niveau du matériau granuleux inférieur à la limite de sécurité; les moyens avertisseurs peuvent également être des moyens lumineux ou sonores, par adjonction d'un dispositif transformateur de signal.

Le bouton-poussoir peut être rappelé en position de repos par des moyens élastiques et, dans cette position de repos, le bouton-poussoir assure la mise à l'atmosphère de la chambre de travail qui commande le déplacement du moyen indicateur visuel.

Le palpeur peut être solidaire d'une vis réglable sollicitée par un moyen élastique rappelant le palpeur en position de repos.

Avantageusement, le détecteur est monté à la partie supérieure du sableur, et le détecteur et le sableur sont reliés à une même source de fluide sous pression.

De préférence, les moyens avertisseurs et le bouton-poussoir sont portés par un même bloc relié par des tuyauteries au sableur et à la source de fluide sous pression.

Avantageusement, le siège de débit est en matériau souple et peut avaler des grains de sable plus importants que sa section de passage théorique.

Pour mieux faire comprendre l'objet de l'invention, on va en décrire, maintenant, à titre d'exemple purement illustratif et non limitatif, un mode de réalisation représenté sur les dessins annexés.

Sur ces dessins :
- les figures 1A, 1B montrent, en coupe, un sableur selon l'invention au repos (figure 1A) et en fonctionnement (figure 1B) ;
- la figure 2 montre en coupe un sableur équipé d'un détecteur de niveau, selon l'invention, associé à des moyens avertisseurs donnant une information lorsque le niveau du sable contenu dans le récipient du sableur est insuffisant, et représente schématiquement l'installation, le sableur étant en fonctionnement et le niveau de sable suffisant ;
- la figure 3 est analogue à la figure 2, le niveau de sable étant au seuil de sécurité ;
- la figure 4 est une coupe partielle du sableur, à plus grande échelle, selon la ligne IV-IV de la figure 7 ;
- la figure 5 est une coupe partielle du sableur, à plus grande échelle, selon la ligne V-V de la figure 7 ;
- la figure 6 est une vue partielle de la figure 4 à plus grande échelle ;
- la figure 7 est une vue de dessus du sableur.

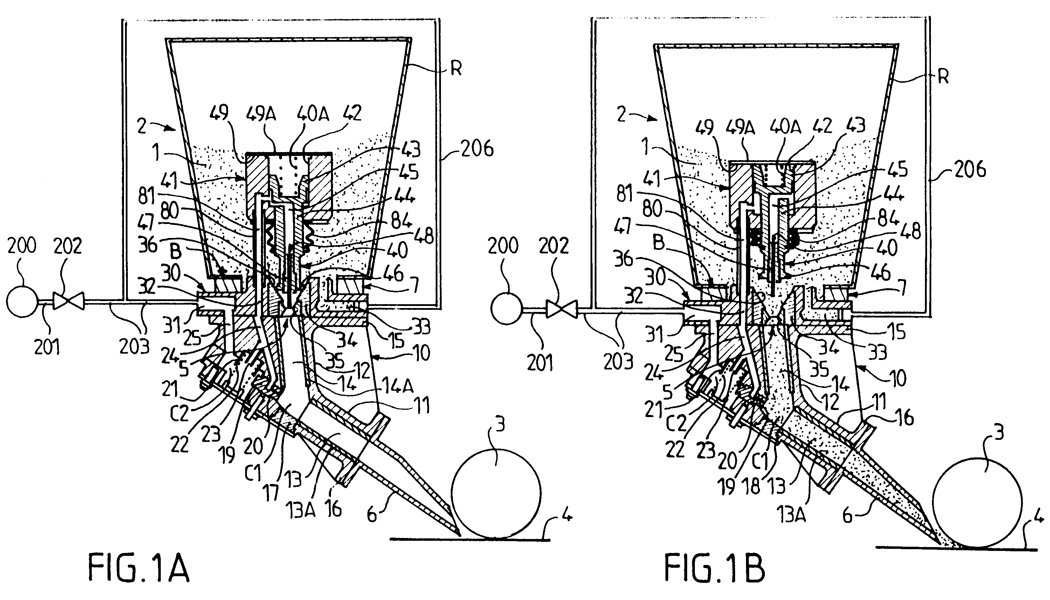

En se reportant aux figures 1A, 1B, le sableur 2 comprend un socle 30 porté par le chassis 7 de la motrice, lequel supporte le récipient R contenant du sable 1 ; solidaire du socle 30, un corps 10 est plaqué sur la face inférieure dudit socle 30. Le corps 10 est une pièce coulée définissant divers conduits. A sa partie inférieure, un conduit 11 terminé par une collerette 16 de raccordement à la tubulure 6 de distribution porte intérieurement une chemise 13A cylindrique définissant un passage 13 ; l'inclinaison du conduit 11 correspond à l'inclinaison désirée de la tubulure 6. Le conduit 11 communique, par l'intermédiaire d'une chambre C1, avec un conduit 12 ménagé à la partie supérieure du corps 10 à laquelle il débouche à l'extérieur du corps 10 en traversant une plaque 15 horizontale qui borde le corps 10 ; le conduit 12, légèrement incliné vers le conduit 11, par rapport à la verticale, porte intérieurement une chemise 14A cylindrique définissant un autre passage 14.

Dans l'axe du passage 13, le corps 10 définit une chambre C2 ; les chambres C1 et C2 sont réalisées dans des logements du corps 10 qui débouchent à l'extérieur par des ouvertures qui sont fermées de manière étanche par une porte de visite 18 ; la porte de visite 18 maintient un obturateur 17 monté dans ladite ouverture correspondant à la chambre C1, et un élément filtrant 22 disposé complètement en travers de la chambre C2 perpendiculairement à la porte de visite 18.

La plaque 15 du corps 10 et le socle 30 ont une section de forme générale circulaire ; le socle 30 est percé de deux conduits borgnes 31 et 33 s'étendant radialement et diamétralement opposés.

Le conduit 31 est relié extérieurement à une tuyauterie 203 et intérieurement à la chambre C2 via un canal 25 ménagé dans le corps 10 ; bien entendu, le conduit 31 pourrait également être relié extérieurement à la chambre C2.

Le conduit 33 est relié extérieurement à une tuyauterie 206, elle-même connectée à la tuyauterie 203, et débouche intérieurement à l'intérieur du récipient R, à la partie inférieure de celui-ci.

La tuyauterie 203 est reliée, via un interrupteur 202, à la sortie 201 d'un compresseur d'air 200.

Le socle 30 est traversé en son centre d'un siège de fermeture 34 de forme annulaire munie d'une portée de siège 36 de forme conique dont la concavité est tournée vers le réservoir R ; le siège de fermeture 34 porte en son centre, en dessous de la portée de siège 36 un siège de débit 35 annulaire de section transversale en forme de diabolo ; lorsque le socle 30 et le corps 10 sont assemblés, les sièges de fermeture 34 et de débit 35 sont au droit du passage 14 ; c'est le siège de débit 35 qui porte l'orifice 5. Avantageusement, le siège de débit 35 est en matériau souple : ainsi, il lui est possible d'avaler des grains de sable plus importants que sa section de passage théorique.

A l'intérieur du récipient R est disposé un bloc-cylindre 41 maintenu en place à distance du socle 30 par des tirants verticaux filetés aux deux extrémités, non représentés, attelés, d'une part, au bloc-cylindre 41 et, d'autre part, au socle 30.

Le bloc-cylindre 41 reçoit à coulissement étanche un piston 40 du type différentiel, dans un alésage 42 également du type différentiel: les deux sections du piston différentiel 40 correspondent l'une à celle d'une queue de piston 43, l'autre à celle d'une tête de piston 44, des joints d'étanchéité étant placés entre respectivement la queue 43 et la tête 44, d'une part, et l'alésage 42, d'autre part; la queue 43 a une section plus grande que celle de la tête 44 et est disposée à la partie supérieure du bloc-cylindre 41.

La tête 44 du piston 40 se termine, à l'opposé de la queue 43, sous forme d'un clapet 46 circulaire ; la tête 44 du piston 40 a une longueur suffisante pour que, lorsque le piston 40 est en position basse, comme représenté à la figure 1A, le clapet 46 est amené à coopérer avec la portée 36 conique du siège de fermeture 34, fermant ainsi l'orifice 5 au travers duquel le sable 1 est empêché de s'écouler ; le piston 40 est sollicité dans cette position par un ressort 40A disposé entre la queue 43 du piston 40 et un couvercle 49A, solidarisé au bloc-cylindre 41 en étant plaqué sur la face frontale 49 de celui-ci, qui ferme l'alésage 42. Un soufflet 84 protège à l'égard du sable 1 le coulissement du piston 40.

La commande en ouverture de l'orifice 5, c'est-à-dire la commande en soulèvement, par rapport à la position représentée à la figure 1A, du piston 40, est réalisée pneumatiquement à partir du compresseur d'air 200, qui peut être le compresseur général d'air permettant la commande de divers organes de la motrice et/ou du train associé, ou un compresseur d'air particulier dédié au sableur.

Pour réaliser ladite commande, la chambre de mise en pression définie par le piston différentiel 40 et le bloc-cylindre 41 est reliée à la chambre C2 du corps 10; cette liaison est réalisée par un conduit 81 dont la majeure partie est constituée par l'intérieur d'un tube 80 encastré à étanchéité à chacune de ses extrémités dans le bloc-cylindre 41, d'une part, et dans le socle 30, d'autre part ; le tube 80 est encastré dans le socle 30 au droit d'un passage 32 qui le traverse et au droit duquel est prévu, dans le corps 10, un passage 24 ; le passage 24 communique avec la chambre C2 par un passage 23 entouré d'un élément filtrant 22 coaxial qui s'étend dans la chambre C2, sur toute la hauteur de celle-ci, et qui est maintenu en place par la porte de visite 18; autour de l'élément filtrant 22 est disposé un pare-jet 21 qui s'étend à mi-hauteur de la chambre C2.

Ainsi, lorsque l'interrupteur 202 est ouvert par l'agent de conduite de la motrice, mettant ainsi en communication la tuyauterie 203 et la sortie 201 du compresseur d'air 200, la pression de l'air comprimé est admise dans la chambre du piston différentiel 40 par le conduit 31, le canal 25, la chambre C2, les passages 23, 24, le conduit 81; la grande section du piston différentiel 40 étant au-dessus de sa petite section, la pression soulève le piston 40 en comprimant le ressort 40A ; dans cette position, telle que représentée à la figure 1B, le clapet 46 s'est écarté de la portée conique 36 de son siège ; le sable 1 descend par gravité à travers l'orifice 5 ouvert, les passages 14, 13, la tubulure 6 jusqu'au rail 4 ; l'air comprimé dévié par la tuyauterie 206 jusqu'au conduit 33, ou amené par un circuit interne reliant le conduit 31 au conduit 33, agit à la base du sable 1 pour détasser celui-ci et faciliter sa descente par gravité; en outre, le sable 1 étant brassé il est séché si nécessaire. Le siège de débit 35, démontable, permet d'adapter le débit de sable à tout type d'engin ou de parcours. On aura noté, en outre, que dans la position de fermeture, telle que représentée à la figure 1A, le sableur est complètement fermé: ainsi, toute vidange intempestive du sable est empêchée, même à très grande vitesse, ainsi que toute remontée d'eau ou d'humidité.

L'invention prévoit également d'assurer un déplacement rapide du sable 1 vers la roue 3 ; à cet effet, le passage 24 du corps 10 communique également avec la chambre C1 par l'intermédiaire d'un ajutage 20 qui débouche selon l'axe du passage 13 et qui est ménagé dans un diffuseur 19 monté à étanchéité dans un logement qui traverse un voile du corps 10 séparant les chambres C1 et C2. Grâce à cette disposition, un débit d'air comprimé traverse la chambre C1, le passage 24, l'ajutage 20 et pousse le sable 1, qui s'écoule dans le passage 14, vers la roue 3.

Pour assurer un passage sans interruption du sable 1 vers la roue 3, le piston différentiel 40 est muni d'un passage axial 45 en communication, d'un côté, avec la chambre définie par le piston différentiel 40 et le bloc-cylindre 41 et, de l'autre côté, avec l'extérieur; à son extrémité vers l'extérieur, le passage axial 45 est muni d'une tige 47 traversée axialement par une aiguille creuse et définissant un passage calibré 48 dans l'axe de l'orifice 5 ; ainsi, un débit de gaz comprimé traverse également depuis le passage 24, le passage 32, le conduit 81, le passage axial 45, le passage calibré 48 et l'orifice 5, un tel courant d'air poussant le sable 1 dans le passage 14 vers la roue 3 ; la tige 47 permet le cassage d'agglomérats éventuels de sable, dûs à l'humidité par exemple, et le refoulement de ceux-ci vers l'extérieur, le passage de l'orifice 5 du siège de débit 35 s'en trouvant libéré.

On appréciera que la tige 47 et le diffuseur 19 étant démontables, le déplacement rapide du sable vers la roue par des courants d'air comprimé peut être ajusté à volonté.

On notera également que ces opérations de démontage sont aisées à effectuer, la partie inférieure constituée par le corps 10 étant elle-même démontable : il n'est donc pas nécessaire pour ce faire de vidanger le récipient R ; ceci est aussi vrai pour les opérations d'entretien courant.

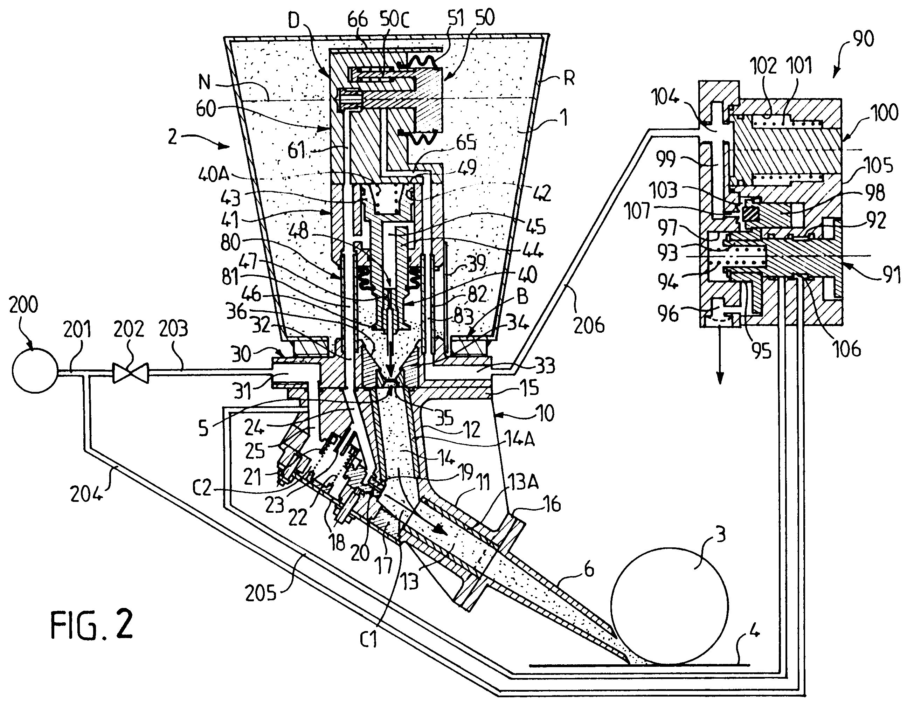

Le sableur qui vient d'être décrit est adapté à être équipé, si on le désire, d'un dispositif permettant de détecter si le niveau du sable 1 contenu dans le récipient R est au-dessus, égal ou en dessous d'un niveau de référence N, ou seuil de sécurité, qui correspond à une quantité de sable suffisante pour se déverser pendant toute la durée d'un freinage ou d'un démarrage sur un trajet considéré. Le sableur ainsi équipé est représenté sur les figures 2 à 8.

Le détecteur de niveau D comprend un boîtier 60 ; le boîtier 60 est agencé pour supporter un équipage mobile 50 monté à coulissement dans le boîtier 60.

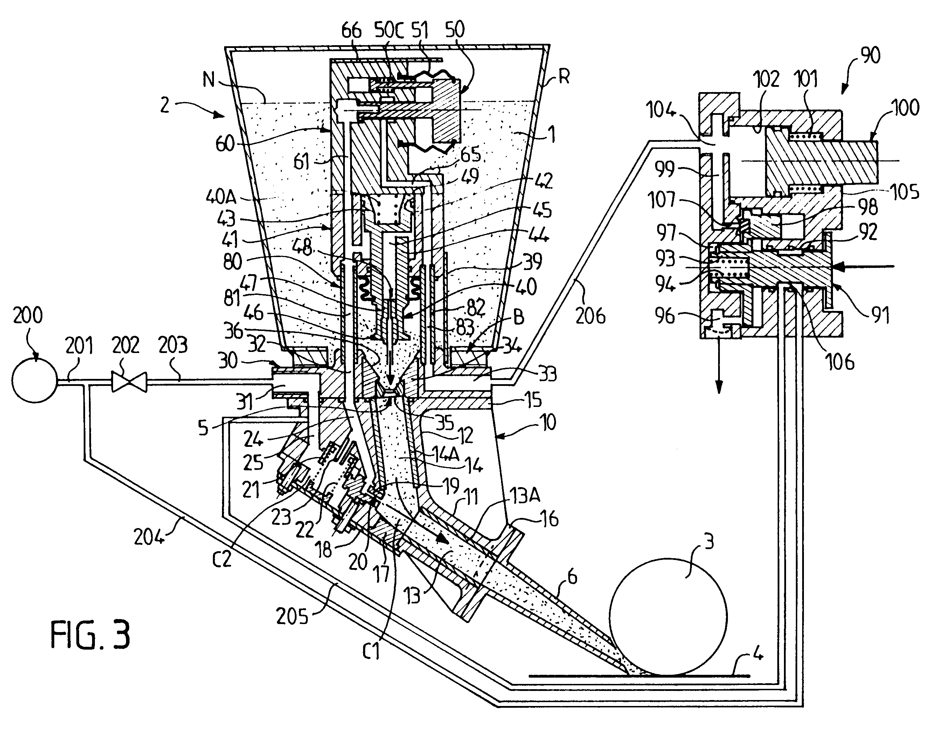

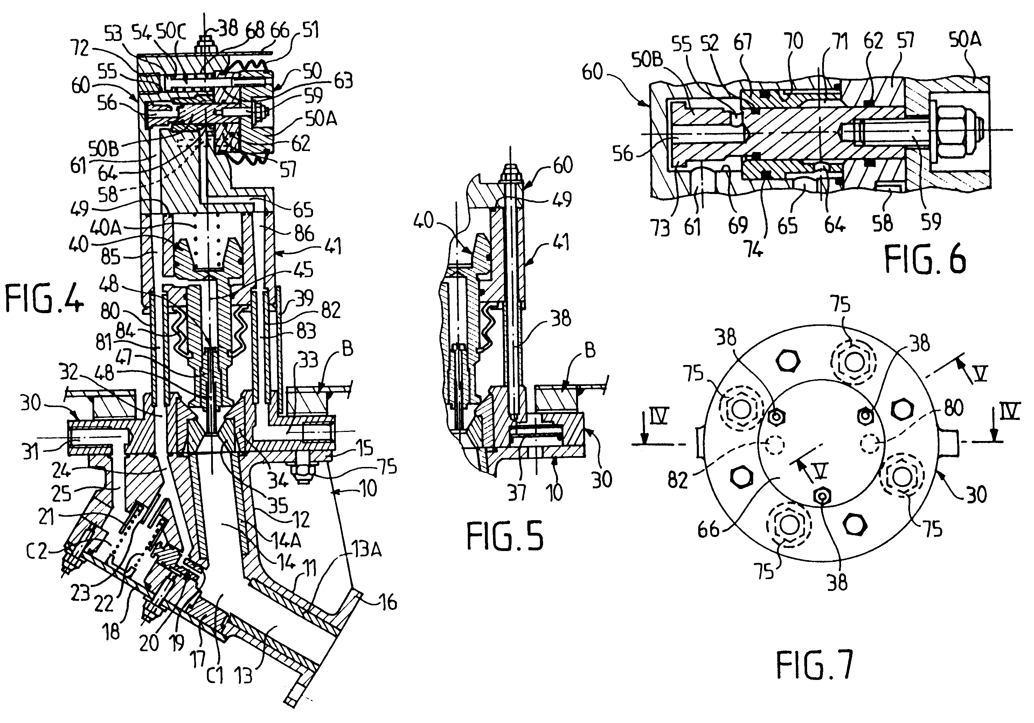

Comme cela est visible sur la figure 4, l'équipage mobile 50 comprend un palpeur 50A faisant saillie à l'extérieur du boîtier 60 et auquel est attelé un piston 50B solidarisé coaxialement au palpeur 50A par une vis de liaison 59, l'axe commun du palpeur 50A et du piston 50B étant horizontal. Par ailleurs, s'étendant parallèlement audit axe, une vis dite vis de palpeur 50C, ayant une tête 53, est vissée dans le palpeur de manière réglable, la vis de palpeur 50C et le piston 50B s'étendent parallèlement du même côté par rapport au palpeur 50A; sur les figures 2 et 3, l'équipage mobile constitué du palpeur 50A, du piston 50B et de la vis de palpeur 50C a été représenté d'une seule pièce pour ne pas rendre difficile la lecture de ces figures compte tenu de leur échelle réduite par rapport à celle de la figure 4.

Pour recevoir l'équipage mobile 50, le boîtier 60 présente un logement de cylindre 70 d'axe horizontal débouchant d'un côté à l'extérieur et de l'autre dans une chambre de pression 69, borgne et de section légèrement inférieure à celle du logement de cylindre 70 en sorte qu'est défini un épaulement annulaire de butée contre lequel est en appui un cylindre de distribution 67 de forme générale tubulaire et monté à étanchéité, grâce à un joint 74, dans le logement de cylindre 70. Le cylindre de distribution 67 est maintenu dans cette position par un palier 57 fixé par une vis de maintien 58 au boîtier 60 et coopérant avec l'extrémité en forme de jupe, du cylindre de distribution 67, opposée à la chambre de pression 69 ; le palier 57 s'étend jusqu'au droit du logement cylindrique 68 qu'il coiffe tout en laissant, dans l'axe dudit logement cylindrique 68, un passage de vis 63 destiné à recevoir à coulissement libre la vis de palpeur 50C ; l'autre extrémité du logement cylindrique 68 est fermée par un bouchon 72 vissé dans le boîtier 60 : ceci permet, en otant le bouchon 72 d'avoir accès à la tête 53 de la vis de palpeur 50C ; un ressort de vis 54 est disposé autour de la vis de palpeur 50C et placé entre la tête 53 de vis et le palier 57.

Le palier 57 est percé en son centre d'un alésage de diamètre intérieur égal à celui du cylindre de distribution 67 et de même axe de façon à recevoir à coulissement étanche le piston 50B : un point d'étanchéité 62 est porté par le piston 50B pour coopérer avec le cylindre de distribution 67.

Lorsque l'équipage mobile 50 est en place dans le boîtier 60, le piston 50B et le cylindre de distribution 67 sont agencés pour constituer des moyens de distribution associés au palpeur 50A ; comme cela est visible sur la figure 4 et la coupe partielle de la figure 8, dans la position la plus à gauche, sur ces figures, dans laquelle le palpeur 50A est en butée contre le palier 57, position vers laquelle il est rappelé par le ressort de vis 54, I'extrémité libre du piston 50B s'étend dans la chambre de pression 69. Cette extrémité est munie d'un canal axial 56 borgne, débouchant dans la chambre de pression 69, auquel est raccordé un canal radial 55 également débouchant dans la chambre de pression 69 ; entre les joints d'étanchéité 52 et 62, la jupe du cylindre de distribution 67 est à distance radiale du piston 50B pour définir une chambre de distribution 71.

Lorsque la chambre de pression 69 est mise en pression suffisante, dans les conditions décrites ci-dessous, cette pression agissant sur le piston 50B déplace l'équipage mobile 50 vers la droite jusqu'à venue en butée d'un talon 73 porté par l'extrémité libre du piston 50B contre l'extrémité frontale du cylindre de distribution 67 qui s'étend radialement dans la chambre de pression 69: les moyens de distribution sont agencés en sorte que, dans cette position la plus à droite de l'équipage mobile 50, le canal radial 55 débouche alors dans la chambre de distribution 71.

La chambre de pression 69 et la chambre de distribution 71 sont reliées, respectivement, à un passage d'alimentation 61 et un passage de commande 65 ménagés dans le boîtier 60 et débouchant à la partie inférieure du boîtier 60.

Le détecteur de niveau D qui vient d'être décrit est placé sur le sableur 2 après qu'on ait oté le couvercle 49A ; le bloc-cylindre 41 du sableur comporte des passages 85, 86 qui le traversent disposés de telle sorte qu'il est possible d'orienter le bloc-cylindre 41 au-dessus du socle 30 de sorte que le passage 85 se trouve au droit du passage 32 du socle 30 et le passage 86 au droit de la sortie du conduit 33 ; ainsi, le conduit 81 réalisé par le tube 80 relie les passages 85 et 32 ; de la même manière, un tube 82 ménageant un conduit 83 relie le passage 86 et la sortie du conduit 33. Le détecteur de niveau D est positionné sur le bloc-cylindre 41 du sableur 2 de sorte que le passage d'alimentation 61 et le passage de commande 65 soient respectivement au droit des passages 85 et 86 et, dès lors, reliés respectivement au passage 32 et au conduit 33 du socle 30.

La tenue mécanique de l'ensemble est réalisée par trois tiges filetées 38 (figures 5 et 7) qui assemblent le boîtier 60, le bloc-cylindre 41 et le socle 30. Des moyens 75 du type vis-écrou assurent la solidarisation du corps 10 au socle 30.

Dans l'exemple qui vient d'être décrit, le palpeur 50A et le piston 50B ont un axe commun horizontal ; selon une variante non représentée, ledit axe est vertical.

Le conduit 33 est destiné à la mise en oeuvre de moyens avertisseurs 100 qui vont être décrits maintenant en se référant à la figure 2.

Les moyens avertisseurs 100 sont portés par un bloc 90 qui comprend également un bouton-poussoir 91 destiné à être actionné manuellement. Le bouton-poussoir 91 est monté coulissant dans un alésage 92 du bloc 90 ; la queue 93 du bouton-poussoir 91 est entourée par une pièce de butée 95 qui en coopérant avec une paroi interne du bloc 90 retient le bouton-poussoir 91 dans sa position de repos représentée à la figure 2, vers laquelle il est sollicité par un ressort 94.

Les moyens avertisseurs 100 sont constitués d'un piston monté coulissant dans un logement cylindrique 102 du bloc 90; un ressort 101 sollicite ledit piston avertisseur 100 dans sa position de repos montrée figure 2: dans cette position, la face externe du piston avertisseur 100 affleure la face frontale 105 du bloc 90. La face de travail du piston avertisseur 100 constitue la paroi mobile d'une chambre de commande 104 reliée par une tuyauterie 206 au conduit 33 du socle 30. La chambre de commande 104 est également reliée par un conduit de décharge 99 et un ajutage 107, ménagés dans le bloc 90, à une chambre de décharge 103, elle-même reliée à un canal de décharge 96 ouvert vers l'extérieur du bloc 90 ; un pion de fermeture 98 est monté coulissant face à l'ajutage 107 ; le pion de fermeture 98 est attelé à la pièce de butée 95, donc au bouton-poussoir 91, de telle sorte que lorsque le bouton-poussoir 91 est actionné et se déplace vers la gauche, par rapport à la figure 2, il entraîne le pion de fermeture 98 qui ferme la sortie de l'ajutage 107 vers la chambre de décharge 103.

Le corps du bouton-poussoir 91 porte une creusure annulaire 106 à sa périphérie permettant au bouton-poussoir 91 de fonctionner à la manière d'un tiroir ; deux tuyauteries 204, 205 débouchent perpendiculairement dans l'alésage 92 du bloc 90 ; les autres extrémités des tuyauteries 204, 205 sont reliées respectivement à la sortie 201 du compresseur d'air 200 et au canal 25 du corps 10 ; la creusure annulaire 106 du bouton-poussoir 91 est telle que dans la position de repos, figure 2, du bouton-poussoir 91, elle ne chevauche que la tuyauterie 204, isolant ainsi les deux tuyauteries 204, 205, tandis que dans la position de travail du bouton-poussoir 91, elle chevauche les deux tuyauteries 204, 205, mettant ainsi les deux tuyauteries 204, 205 en communication.

Le fonctionnement est le suivant.

Pour la mise en oeuvre du sableur 2, un opérateur ouvrant l'interrupteur 202 envoie de l'air comprimé dans la tuyauterie 203 donc dans le conduit 81 et le piston 40 est soulevé, le clapet 46 quittant la portée conique 36 du siège de fermeture 34 ; l'orifice 35 est ouvert et le sable 1 s'écoule par gravité vers la tubulure 6 ; parallèlement, le passage d'alimentation 61 est mis en pression ; la section du palpeur 50A de l'équipage mobile 50 soumis à la pression du sable qui l'entoure et le tarage du ressort 54 de la vis de palpeur 50C sont choisis en sorte que, tant que le niveau du sable 1 dans le récipient R est supérieur au niveau de sécurité N, la pression d'air comprimé agissant sur le piston 50B du détecteur D de niveau ne peut déplacer l'équipage mobile 50 ; dès lors, les moyens avertisseurs 100 sont au repos. Parallèlement également, de l'air comprimé traverse l'ajutage 20 dans le corps 10 et le passage calibré de la tige 47 de la tête 44 du piston 40, ces deux courants d'air accélérant la vidange du sable 1 vers la tubulure 6. Ce fonctionnement est représenté à la figure 2. On aura noté qu'il est également possible pour l'opérateur de mettre en oeuvre le sableur 2 en actionnant le bouton-poussoir 91 du bloc 90 au lieu de l'interrupteur 202 ; en effet, le déplacement du bouton-poussoir 91 reliant les tuyauteries 204, 205, c'est par ces tuyauteries que le canal 25 est alimenté en air comprimé.

Si le niveau de sable 1 est inférieur ou égal au niveau N, comme montré à la figure 3, l'équipage mobile 50 s'est déplacé et, dès lors, la tuyauterie 206 reçoit un débit d'air comprimé qui traverse le canal de décharge 96 du bloc 90 via la chambre de commande 104, le conduit 99 ; si l'opérateur agit sur le bouton-poussoir 91, il entraîne le pion de fermeture 98 qui obture l'ajutage 107 : la chambre de commande 104 monte en pression et fait jaillir à l'extérieur, contre l'action du ressort 101, le piston avertisseur 100 qui, dépassant la face frontale du bloc 90, signale l'insuffisance du niveau de sable 1 dans le récipient R.

## Revendications

**1 -** Sableur comportant un récipient contenant un matériau granuleux, le récipient étant adapté en partie basse à coopérer avec un orifice à ouverture commandée pour permettre, lorsqu'on le souhaite, I'écoulement du matériau granuleux, caractérisé par le fait que le sableur (2) comprend un socle (30) portant l'orifice (5) à ouverture commandée et supportant d'un côté, le côté inférieur, un corps (10) portant une tubulure (6) de distribution du matériau granuleux (1), pour le distribuer en un endroit désiré, et de l'autre côté les moyens de commande en ouverture de l'orifice (5) qui sont en outre contenus dans le récipient (R). le corps (10) étant fixé au socle (30) de manière démontable.

**2 -** Sableur selon la revendication 1, caractérisé par le fait que les moyens de commande en ouverture de l'orifice (5) sont mis en oeuvre au moyen d'un fluide sous pression, et sont constitués d'un bloc-cylindre (41) à axe vertical recevant à coulissement étanche un piston (40) du type différentiel ayant deux sections correspondant respectivement l'une à celle d'une queue (43) de piston, l'autre à celle d'une tête (44) de piston, la queue (43) ayant une section plus grande que celle de la tête (44) et étant disposée à la partie supérieure du bloc-cylindre (41).

**3** - Sableur selon la revendication 2, caractérisé par le fait que l'orifice (5) est porté par un siège de débit (35) annulaire placé dans l'axe d'une portée de siège (36) de forme conique dont la concavité est tournée vers le réservoir (R) et avec laquelle coopère un clapet (46) circulaire ménagé à l'extrémité de la tête (44) du piston (40).

**4 -** Sableur selon la revendication 3, caractérisé par le fait que la portée de siège (36) est ménagée à la périphérie d'un siège de fermeture (34) qui supporte le siège de débit (35), le siège de débit (35) étant accessible de l'extérieur lorsque le corps (10) est déposé du socle (30).

**5 -** Sableur selon l'une des revendications 1 à 4, caractérisé par le fait que le corps (10) présente un passage (14) débouchant à sa partie supérieure au droit de l'orifice (5) et relié à sa partie inférieure à un passage (13), incliné par rapport audit passage (14) et connecté à la tubulure (6) de distribution.

**6 -** Sableur selon l'une des revendications 2 à 5, caractérisé par le fait que le bloc-cylindre (41) est alimenté en fluide sous pression par un conduit (81) dont la majeure partie est constituée par l'intérieur d'un tube (80) encastré, à étanchéité, à chacune de ses extrémités, dans le bloc-cylindre (41), d'une part, et dans le socle (30), d'autre part.

**7 -** Sableur selon la revendication 6, caractérisé par le fait que le socle (30) est percé d'un conduit (31) relié, d'un côté, à une source (200) de fluide sous pression et, de l'autre côté, au conduit (81) d'alimentation du bloc-cylindre (41) par l'intermédiaire d'un canal (25) et de passages (23, 24) ménagés dans le corps (10).

**8 -** Sableur selon l'une des revendications 1 à 7, caractérisé par le fait que le corps (10) porte un ajutage (20) destiné à recevoir du fluide sous pression et à diriger un jet de ce fluide vers la tubulure (6) de distribution.

**9 -** Sableur selon l'une des revendications 2 à 8, caractérisé par le fait que le piston (40) est muni d'un passage axial (45) comportant un passage calibré (48) dans l'axe de l'orifice (5), le passage calibré (48) étant destiné à recevoir du fluide sous pression et à diriger un jet de ce fluide vers la tubulure (6) de distribution.

**10 -** Sableur selon l'une des revendications 1 à 9, caractérisé par le fait que le socle (30) est percé d'un conduit (33) qui débouche intérieurement à l'intérieur du récipient (R), de l'air soufflé dans ledit conduit (33) permettant le détassage et le séchage du sable contenu dans le récipient (R)

**11 -** Sableur selon l'une des revendications 1 à 10, caractérisé par le fait que le sableur (2) est équipé d'un détecteur (D) du niveau du matériau granuleux (1) contenu dans le récipient (R).

**12 -** Sableur selon la revendication 11, caractérisé par le fait que le détecteur (D) de niveau comprend :
- un palpeur (50A) disposé à l'intérieur du récipient (R) et monté mobile, l'ensemble étant tel que, lorsque le niveau du matériau (1) est supérieur ou égal à une limite de sécurité (N), le palpeur (50A) au repos se trouve au voisinage du matériau granuleux (1) ou dans ce matériau (1) ;
- des moyens pour exercer une force sur le palpeur (50A), de sorte que, lorsque le niveau du matériau granuleux (1) est inférieur à la limite de sécurité (N), un déplacement du palpeur (50A) soit assuré sous l'action de cette force ;
- et des moyens avertisseurs (100) commandés par le déplacement du palpeur (50A) propres à indiquer à un opérateur que le niveau du matériau granuleux (1) est inférieur à la limite de sécurité (N),
le palpeur (50A) étant monté mobile suivant une direction et les susdits moyens pour exercer une force étant propres à exercer une force sur le palpeur (50A) selon ladite direction.

**13 -** Sableur selon la revendication 12, caractérisé par le fait que le palpeur (50A) est monté mobile suivant une direction sensiblement horizontale et les susdits moyens pour exercer une force sont propres à exercer une force également horizontale sur le palpeur (50A).

**14 -** Sableur selon la revendication 12, caractérisé par le fait que le palpeur (50A) est monté mobile suivant une direction sensiblement verticale et les susdits moyens pour exercer une force sont propres à exercer une force également verticale sur le palpeur (50A).

**15 -** Sableur selon l'une des revendications 12 à 14, caractérisé par le fait qu'un bouton-poussoir (91), destiné à être actionné manuellement, est prévu pour la commande de ces moyens pour exercer ladite force.

**16 -** Sableur selon l'une des revendications 12 à 15, caractérisé par le fait que les moyens pour exercer ladite force comprennent un piston (50B) lié au palpeur (50A), un fluide sous pression étant admis du côté du piston (50B) opposé au palpeur (50A) de sorte que, lorsque ce fluide sous pression est envoyé sur le piston (50B), celui-ci est sollicité vers le matériau granuleux (1).

**17 -** Sableur selon l'une des revendications 12 à 16, caractérisé par le fait que le palpeur (50A) est associé à un distributeur propre à commander les moyens avertisseurs (100) par envoi d'un fluide sous pression sur ces moyens avertisseurs (100) lorsque le déplacement du palpeur (50A) et du distributeur lié à ce palpeur (50A) est suffisant.

**18 -** Sableur selon la revendication 17, caractérisé par le fait que le piston (50B) lié au palpeur (50A) est agencé en sorte que c'est le piston (50B) qui joue le rôle dudit distributeur.

**19 -** Sableur selon l'une des revendications 15 à 18, caractérisé par le fait que les moyens avertisseurs (100) comprennent un indicateur visuel propre à faire saillie sous l'action d'un fluide sous pression lorsque l'opérateur appuie sur le bouton-poussoir (91) et que le palpeur (50A) se déplace suffisamment, en raison d'un niveau du matériau granuleux (1) inférieur à la limite de sécurité (N).

**20 -** Sableur selon la revendication 19, caractérisé par le fait que le bouton-poussoir (91) est rappelé en position de repos par des moyens élastiques (94) et, dans cette position, il assure la mise à l'atmosphère de la chambre de travail qui commande le déplacement dudit moyen indicateur visuel.

**21 -** Sableur selon l'une des revendications 12 à 20, caractérisé par le fait que le palpeur (50A) est solidaire d'une vis (50C) réglable rappelant le palpeur (50A) en position de repos.

**22 -** Sableur selon l'une des revendications 12 à 21, caractérisé par le fait que le détecteur (D) est monté à la partie supérieure du sableur (2), et le détecteur (D) et le sableur (2) sont reliés à une même source (200) de fluide sous pression.

**23 -** Sableur selon l'une des revendications 15 à 22, caractérisé par le fait que les moyens avertisseurs (100) et le bouton-poussoir (91) sont portés par un même bloc (90) relié par des tuyauteries au sableur (2) et à la source (200) de fluide sous pression.

**24 -** Sableur selon l'une des revendications 3 à 23, caractérisé par le fait que le siège de débit (35) est en matériau souple.
